Europäisches Patentamt

European Patent Office

Office européen des brevets

(11) Veröffentlichungsnummer: **0 181 412**
**A1**

## (12) EUROPÄISCHE PATENTANMELDUNG

(21) Anmeldenummer: 84113581.7

(22) Anmeldetag: 10.11.84

(51) Int. Cl.⁴: **H 04 N 5/33**

(43) Veröffentlichungstag der Anmeldung:
**21.05.86 Patentblatt 86/21**

(84) Benannte Vertragsstaaten:
**AT BE CH DE FR GB IT LI LU NL SE**

(71) Anmelder: Tele-Security-Foto Überwachungsanlagen
GmbH
Industriestrasse 18
D-6794 Brücken(DE)

(72) Erfinder: Schneider, Karl, Dipl.-Ing.
Hauptstrasse 99
D-6799 Herschweiler-Pettersheim(DE)

(72) Erfinder: Lauer, Günter A.
Schillerstrasse 17
D-6900 Heidelberg(DE)

(74) Vertreter: Selting, Günther, Dipl.-Ing. et al,
Deichmannhaus am Hauptbahnhof
D-5000 Köln 1(DE)

(54) Fernseh-Aufnahmesystem.

(57) Eine im Infrarotbereich empfindliche Videokamera (10) mit Haltefähigkeit für das Ladungsbild wird in Verbindung mit einem gepulsten Infrarotstrahler (15) benutzt. Der Infrarotstrahler (15) wird so angesteuert, daß er nur in den Austastlücken zwischen den Bildern des Videobildes Infrarotimpulse aussendet. Durch diese Impulse wird das aufzunehmende Objekt kurzzeitig beleuchtet. Die Strahlung wird von dem Bildwandler der Videokamera (10) aufgenommen, gespeichert und nachfolgend abgetastet. Bei der Abtastung wird das Strahlungsbild gelöscht. Durch den Impulsbetrieb des Infrarotstrahlers (15) kann ein kleinformatiger Infrarotstrahler mit geringer Leistungsaufnahme benutzt werden. Es entstehen scharf voneinander getrennte Infrarotbilder.

FIG.1

EP 0 181 412 A1

Fernseh-Aufnahmesystem

Die Erfindung betrifft ein Fernseh-Aufnahmesystem mit einer im Infrarotbereich empfindlichen Videokamera mit Haltefähigkeit für das Ladungsbild.

Viele Videokameras sind nicht nur im Bereich des sichtbaren Lichtes empfindlich, sondern ihr Empfindlichkeitsbereich erstreckt sich auch auf den nahen Infrarotbereich, dessen Strahlung für das menschliche Auge nicht erkennbar ist. Es ist bekannt, z.B. für militärische und kriminaltechnische Überwachungen Infrarotkameras in Verbindung mit Infrarotstahlern einzusetzen, um unentdeckt Bildaufzeichnungen vorzunehmen. Die Infrarotstrahler sind Dauerstrahler, die zur ausreichenden Ausleuchtung der Bildszene einen sehr hohen Leistungsbedarf, d.h. eine hohe Stromaufnahme, haben. Dabei ist zu berücksichtigen, daß die Strahlungsquelle eines Infrarotstrahlers normalerweise ein sehr breites Strahlungsspektrum hat, das bis ins sichtbare Licht hineinreicht, wobei durch ein vorgesetztes Filter erreicht wird, daß nur Strahlung im Infrarotbereich ausgesandt wird. Der größte Teil der aufgenommenen Energie wird in Wärme umgesetzt. Derartige Infrarotstrahler sind darüber hinaus aus großvolumig und schwer.

Der Erfindung liegt die Aufgabe zugrunde, ein Fernseh-Aufnahmesystem der eingangs genannten Art zu schaffen, mit dem Aufnahmen im Infrarotbereich durchgeführt werden können und das eine energiesparende und kleinformatige Strahlungsquelle aufweist.

Die Lösung dieser Aufgabe besteht erfindungsgemäß darin, daß die Videokamera mit einem Infrarotstrahler gekoppelt ist, der in den Austastlücken des Fernsehbildes Strahlungsimpulse in den Erfassungsbereich der Videokamera aussendet.

Nach der Erfindung wird die Bildszene vom Infrarotstrahler nicht ständig ausgeleuchtet, sondern nur ganz kurzzeitig in den Austastlücken zwischen zwei Fernsehbildern. Durch diese kurze Beleuchtung entsteht am Bildwandler der Videokamera ein Ladungsbild, das vorübergehend erhalten bleibt und durch die nachfolgend durchgeführte Bildabtastung gelöscht wird. Die extrem kurzen Infrarotblitze reichen aus, um das Bild auf den Bildwandler der Videokamera zu werfen, wo es festgehalten wird. Infolge der Verwendung eines Infrarotstrahlers, der kurze Lichtblitze, vorzugsweise im Nanosekundenbereich, aussendet, kann der Infrarotstrahler kleinformatig ausgebildet und mit einer sehr geringen elektrischen Leistung betrieben werden. Derartige impulsbetriebene Infrarotstrahler sind bekannt und im Handel erhältlich. Es handelt sich um Laserdioden, die als Sender in Glasfaserkabelsystemen eingesetzt werden können und die extrem kurze Impulse erzeugen können. Infolge der kurzzeitigen Aktivierung der Laserdiode kann diese mit einer hohen Leistung gepulst werden, wobei wegen der Impulsabstände die Gesamtleistung äußerst niedrig ist. Derartige Laserdioden haben geringe Abmessungen, so daß der Infrarotstrahler unmittelbar an dem Gehäuse der Videokamera angebracht werden kann.

Das erfindungsgemäße Fernseh-Aufnahmesystem hat den Vorteil, daß der Infrarotstrahler wegen der von ihm ausgesandten extrem kurzen Strahlungsblitze nicht anpeilbar ist. Das System eignet sich daher insbesondere für unbemerkte Überwachungen. Die Aufnahmen können mit sehr enger spektraler Bandbreite durchgeführt werden. Insbesondere kann man vermeiden, daß das Videobild durch Strahlung im thermischen Infrarotbereich verfälscht wird.

Ein weiterer Vorteil besteht darin, daß jedes einzelne Videobild durch einen Blitz separat belichtet wird. Auf diese Weise lassen sich selbst schnellste Bewegungsabläufe in den einzelnen Bewegungsphasen Bild für Bild genau festhalten, ohne daß eine Bewegung auf einem Einzelbild verwischt. Es ist daher möglich, das Aufnahmesystem auch für die Materialprüfung, für Meßsysteme, in der Medizintechnik, Nachrichtentechnik und für militärische Anwendungen einzusetzen.

Dadurch, daß Kameraoptik und Infrarotstrahler im wesentlichen die gleiche Strahlausrichtung haben, ist eine für das menschliche Auge unsichtbare optimale Ausleuchtung des aufzunehmenden Objektes mit minimaler Schattenbildung gewährleistet.

Gemäß einer vorteilhaften Ausgestaltung der Erfindung ist vorgesehen, daß die Kamera einen CCD-Bildwandler aufweist. Derartige CCD-Bildwandler (Charge Coupled Device) bestehen aus einer Halbleiterscheibe mit zahlreichen Bildpunkten, auf denen über die Kameraoptik das Bild abgebildet wird. Hierdurch entsteht ein Ladungsbild, das durch aufeinanderfolgendes Auslesen der Signale der einzelnen Bildpunkte gelöscht wird. Andere Videokameras, die bei dem erfindungsgemäßen Aufnahmesystem benutzt werden können, sind Si-Multidiodenröhren, Nevicons, Ultricons usw.

Obwohl die Videoaufnahmen im Infrarotbereich gemacht werden, können in vielen Fällen übliche Fernsehkameras unverändert benutzt werden, weil sich deren Empfindlichkeitsbereich bis in den Infrarotbereich hinein erstreckt. Wenn mit einer derartigen Videokamera in Verbindung mit dem gepulsten Infrarotstrahler Bilder im Dunkeln aufgenommen werden, sind keinerlei zusätzliche Maßnahmen erforderlich. Es ist aber auch möglich, das Fernseh-Aufnahmesystem bei Licht, z.B. Tageslicht oder künstlichem Licht, einzusetzen. Hierbei wird vorzugsweise vor der Videokamera ein Tageslicht-Sperrfilter angeordnet und die Videokamera kann mit fester Blendenöffnung betrieben werden. Durch das Filter wird das sichtbare Licht von der Kamera ferngehalten, so daß diejenige Strahlung, die von der Videokamera registriert wird, fast ausschließlich von dem Infrarotstrahler stammt. Da der Infrarotstrahler aber mit definierter Strahlungsleistung abstrahlt, kann die Blendenöffnung auf diese Strahlungsleistung abgestimmt wer-

- 5 -

den. Es ist daher nicht erforderlich, die Blende in Abhängigkeit von der Strahlungsmenge des vorhandenen sichtbaren Lichtes zu verändern. Ein solches Fernseh-Aufnahmesystem kann als Überwachungssystem fest installiert sein und liefert unabhängig von den jeweiligen Lichtverhältnissen Bilder von konstanter Qualität.

Für größere Reichweiten kann man als Infrarotstrahler zweckmäßigerweise eine Laserdiode benutzen. Im Nahbereich reicht eine LED-Diode aus.

Im folgenden wird unter Bezugnahme auf die Zeichnungen ein Ausführungsbeispiel der Erfindung näher erläutert.

Es zeigen:

Fig. 1     ein Blockschaltbild des Fernseh-Aufnahmesystems und
Fig. 2     ein Impulsbild zur Verdeutlichung der zeitlichen Zuordnung der Blitzsignale zum Videosignal.

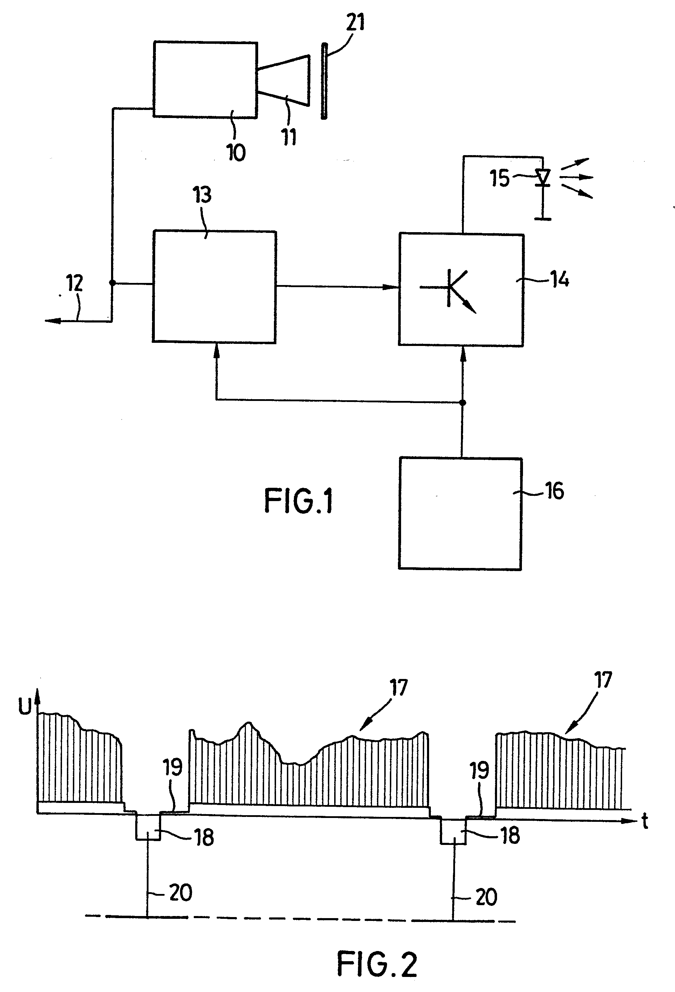

Gemäß Fig. 1 ist eine herkömmliche Videokamera 10 vorgesehen, die durch das Objektiv 11 hindurch Videobilder aufnimmt. Bei der Videokamera 10 handelt es sich beispielsweise um eine Kamera mit CCD-Bildwandler. Die Ausgangsleitung 12 der Videokamera 10 führt zu einem Empfänger oder einem Aufzeichnungsgerät und ist außerdem an die Impulsabtrennstufe 13 angeschlossen. In der Impulsabtrennstufe 13 werden die im Videosignal enthaltenen Austastlücken zwischen zwei Videobildern erkannt. Die Impulsabtrennstufe 13 liefert am Anfang einer jeden Austastlücke einen Synchronisierimpuls an eine Schaltstufe 14, die einen schnellen elektronischen Schalter enthält. An den Ausgang der Schaltstufe 14 ist eine im Infrarotbereich arbeitende Laserdiode 15 angeschlossen, die den Infrarotstrahler bildet, welcher die von der Videokamera 10 aufzunehmende Szene kurzzeitig beleuchtet. Die Spannungsversorgung 16 liefert die für den Betrieb der Laserdiode 15 benötigte Spannung an die Schaltstufe 14 und ferner liefert die Spannungsversorgung 16 auch die Versorgungsspannung für die Impulsabtrennstufe 13.

Fig. 2 zeigt schematisch den zeitlichen Verlauf der Spannung U des Videosignals an Leitung 12. Zwischen zwei Videobildern, deren Bildinformation mit 17 bezeichnet ist, befindet sich die Austastlücke 18, auf die die Schwarzschulter 19 zur Regulierung des Schwarzpegels folgt. Die Schaltstufe 14 sorgt dafür, daß im Bereich der Austastlücke 18 die Laserdiode 15 mit einem kurzen Nadelimpuls 20 angesteuert wird. Jeder Nadelimpuls 20 hat eine Impulsdauer von einigen Nanosekunden, und er ist viel kürzer als die Austastlücke 18. Das System würde allerdings auch dann funktionieren, wenn die Nadelimpulse 20 sich über die Rückflanke der Austastlücke 18 hinweg erstrecken würden. Vorzugsweise befinden sich die Nadelimpulse 20 jedoch ausschließlich im Bereich der Bild-Austastlücken 18.

Das dargestellte Fernseh-Aufzeichnungssystem arbeitet wie folgt: Während die Videokamera 10 aufeinanderfolgend Videobilder aufnimmt, wird die Laserdiode 15 von der Schaltstufe 14 jeweils in der Austastlücke 18 zwischen zwei Videobildern mit einem kurzen Nadelimpuls 20 angesteuert. Die Laserdiode 15 sendet dann in der Austastlücke 18 einen kurzen Infrarotblitz aus, der die aufzunehmende Szene beleuchtet. Das Bild wird von dem (nicht dargestellten) Bildwandler der Videokamera 10 als Ladungsbild gespeichert und nachfolgend abgetastet. Bei der Abtastung werden die Ladungen der einzelnen Speicherelemente gelöscht.

Damit die Videokamera 10 auch bei sichtbarem Licht reine Infrarotbilder aufnehmen kann, ist vor dem Objektiv 11 ein Infrarotfilter 21 angeordnet. Dieses Infrarotfilter 21 hält das sichtbare Licht von dem Objektiv 11 fern, so daß ausschließlich die Infrarotstrahlung, die von der Laserdiode 15 ausgesandt worden ist und von den aufzunehmenden Objekten reflektiert wird, auf den Bildwandler fällt.

Die Laserdiode 15 ist vorzugsweise an der Videokamera 10 selbst oder in deren unmittelbarer Nähe angeordnet.

ANSPRÜCHE

1. Fernseh-Aufnahmesystem mit einer im Infrarotbereich empfindlichen Videokamera mit Haltefähigkeit für das Ladungsbild,
d a d u r c h   g e k e n n z e i c h n e t ,
daß die Videokamera (10) mit einem Infrarotstrahler (15) gekoppelt ist, der in den Austastlücken (18) des Fernseh-Signals Strahlungsimpulse
in den Erfassungsbereich der Videokamera aussendet.

2. Fernseh-Aufnahmesystem nach Anspruch 1, dadurch
gekennzeichnet, daß die Kamera einen CCD-Bildwandler aufweist.

3. Fernseh-Aufnahmesystem nach Anspruch 1 oder 2,
dadurch gekennzeichnet, daß die Strahlungsimpulse
(20) viel kürzer sind als die Austastlücke (18)
und vorzugsweise eine Impulsdauer im Nanosekundenbereich aufweisen.

4. Fernseh-Aufnahmesystem nach einem der Ansprüche 1
bis 3, dadurch gekennzeichnet, daß vor der Videokamera (10) ein nur für Infrarotlicht durchlässiges Filter (21) angeordnet ist und die Videokamera
(10) mit fester Blendenöffnung betrieben wird.

5. Fernseh-Aufnahmesystem nach einem der Ansprüche 1
bis 4, dadurch gekennzeichnet, daß der Strahlungssender eine Infrarotstrahlung emittierende Diode
(15) ist.

0181412

6. Fernseh-Aufnahmesystem nach einem der Ansprüche 1 bis 5, dadurch gekennzeichnet, daß der Strahlungssender eine Laserdiode ist.

FIG.1

FIG.2

0181412
Nummer der Anmeldung

EP 84 11 3581

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | FR-A-2 263 650 (PHILIPS' GLOEILAMPENFABRIEKEN) <br> * Seite 4, Zeile 5 - Seite 5, Zeile 27; Seite 9, Zeilen 22-32 * <br><br> --- | 1 | H 04 N 5/33 |
| A | US-A-3 577 153 (MOTOI YAGI u.a.) <br> * Spalte 3, Zeilen 16-23 * <br><br> --- | 1 | |
| A | DE-A-3 338 708 (OLYMPUS OPTICAL CO. LTD.) <br> * Seite 2, Zeilen 4-23 * <br><br> --- | 1,2 | |
| A | REVIEW OF SCIENTIFIC INSTRUMENTS, Band 49, Nr. 10, Oktober 1978, Seiten 1392-1398, American Institute of Physics, New York, US; W.W. MARDEN u.a.: "Pulsed illumination, closed circuit television system for real-time viewing of unsteady ($>$1 mus) events" <br> * Seite 1392, Zeilen 1-24 * <br><br> --- | 1,2 | **RECHERCHIERTE SACHGEBIETE (Int. Cl.4)** <br><br> H 04 N |
| A | US-A-3 748 383 (R. GROSSMAN) <br><br> ----- | | |

Der vorliegende Recherchenbericht wurde für alle Patentansprüche erstellt

| Recherchenort DEN HAAG | Abschlußdatum der Recherche 20-08-1985 | Prüfer CRISTOL Y. |
|---|---|---|